# EUROPÄISCHE PATENTANMELDUNG

(11) **EP 1 759 818 A1**
(43) Veröffentlichungstag der Anmeldung: **07.03.2007**
(21) Anmeldenummer: 06022765.9
(22) Anmeldetag: 03.05.2001
(51) Int. Cl.: B25J 19/00, B23K 26/08

(54) **Integration eines Lasers an einem Roboterarm**

(62) Teilanmeldung aus: 01110724.0
(71) Anmelder: Robot Technology GmbH, 63801 Kleinostheim (DE)
(72) Erfinder: Maier, Stefan, 63768 Rottenberg (DE); Wechs, Thomas, 63911 Klingenberg (DE)
(74) Vertreter: Thürer, Andreas

(57) **Zusammenfassung**

Integration eines Lasers an einem Roboter mit einer zentralen Strahlzuführung erfolgt derart, dass ein Lasergehäuse (3.2) fralwählbar direkt an einer Abtriebseinheit (3.5) in einem Winkel um 90° zu der Mittelachse einer Achse 3 (3) so anzuordnen ist, dass der Austritt des Laserstrahls (6) in die Achsen 4 und 5 als Kopfachsen (4,5) erfolgt. Im Anschluss an dem Lasergehäuse (3.2) ist eine Antriebseinheit (4.1) der ersteren Kopfachse (4) zuzuordnen. Auf der Kopfachse (4) ist jeweils eine Drehdurchführung (4.6;4.7) für die Elektrosignale und für das Prozessgas anzuordnen als auch ein Teil der Umlenkspiegel (4.4;4.5;4.8). Das Antreiben der Kopfachse (4) erfolgt mittels unmittelbarem Verbindens einer Antriebseinheit (4.1) mit einem Getriebe (4.7). Der Kopfachse (5) ist ein Umlenkspiegel (5.5) zuzuordnen. Eine Antriebseinheit (5.1) und ein Getriebe (5.2) für die Kopfachse (5) sind in der Kopfachse (4) untergebracht. (Fig. 1)

## Beschreibung

Die Erfindung betrifft eine Integration eines Lasers an einem Roboter als optische Bearbeitungseinrichtung, insbesondere für einen Mehrachsenroboter, gemäß der Merkmale des Oberbegriffs des Anspruches 1.

Merkmale dieser Art von Integrationen eines Lasers als optische Ablenkeinrichtung in Robotern sind aus der EP 0 280 739 derart bekannt, dass der Laser an das Ende des Roboters angeordnet ist. Die Unteransprüche dazu haben einen rotierenden und parabol geformten Spiegel zum Inhalt, welcher den Laserstrahl umlenkt und zugleich fokussiert. Dieser rotierende Spiegel selbst bewegt sich hierbei auf der normalen Linie des Lasermittelpunktes in Richtung der Achsen.
Eine größere Handachse hat eine größerere Störkontur und eine sehr hohe Traglast des Roboters zur Folge. Deweiteren ist die Bewegungsfreiheit des Roboters weitestgehend eingeschränkt.

Daher liegt der Erfindung die Aufgabe zugrunde, mittels einer Anordnung den Laser in einem Roboter so zu Integrieren, dass die zuvor genannten Nachteile mittels einer wesentlich reduzierten Traglast und demzufolge einer wesentlich geringeren Störkontur zu eliminieren als auch die Bearbeitungsfreiheit des Roboters zu vergrößern sind.

Die Aufgabe wird durch die kennzeichnenden Merkmale des Anspruchs 1 gelöst.

Hervorzuheben an der Erfindung ist, dass eine vorhandene Roboterachse durch ein Lasergehäuse mit einem integrierten Laser zu ersetzen ist und Kopfachsen des Roboters mit einer Spiegelumlenkung im Anschluß an das Lasergehäuse anzuordnen sind.
Um mittels eines standardgemäßem Roboters mit großer Bewegungsfreiheit sowie geringerem Gewicht die Störkonturen zu minimieren und dessen Reichweite variieren zu können, ist an einer Abtriebseinheit das Lasergehäuse direkt und in einem Winkel um 90° zu einer Mittelachse einer Achse 3 derart anzuordnen, dass der Austritt des Laserstrahls in die Richtung der zwei folgenden Kopfachsen erfolgt. Im Anschluss an dem Lasergehäuse ist der ersteren Kopfachse eine Antriebseinheit zuzuordnen.
Jeweils eine Drehdurchführung für Elektrosignale und für das Prozessgas in der ersteren Kopfachse (Achse 4) läßt einen unbegrenzten Drehbereich über 360° zu. Somit ist eine bessere Bauteilzugängigkeit und eine Zykluszeitersparnis gegeben.
Das frelwählbare Anbringen des Lasergehäuses In Richtung des Laserstrahls an die Abtriebseinheit der Achse 3 hat eine variablere Anpassung der Reichweite zur Folge.
Um mit dem Laserstrahl lotrecht auf die letztere Achse - einer Kopfachse - und auf dessen von vier Umlenkspiegeln letzteren Umlenkspiegel aufzutreffen sowie koaxial aus dieser Kopfachse wieder auszutreten, unterbleibt es, eine weitere Kopfachse verwenden zu müssen, ohne hierbei die Bewegungsfreiheit einzuschränken.
Um die Erfindung technisch realisieren zu können und den koaxialen Austritt des Laserstrahls zu gewährleisten, ist es erforderlich einen Teil der Umlenkspiegel auf die erstere Kopfachse - Achse 3 - und den restlichen auf die zweite Kopfachse - Achse 5 - anzuordnen. Somit erfolgt das Anordnen der ersten drei Umlenkspiegel auf die erstere Kopfachse und der vierte und letzte Umlenkspiegel auf die letztere Kopfachse.
Um diese Ungenauigkeiten und Störfaktoren zu minimieren zeichnen auch die Anordnungen verantwortlich, dass die erstere Kopfachse diese zugehörige Antriebseinheit mittels eines Getriebe unmittelbar zu verbinden ist, und dass in einem Gehäuse, welches der ersteren Kopfachse zugeordnet ist, die zweite Antriebseinheit und ein Getriebe für die zweite Kopfachse unterzubringen ist.

Anhand von Ausführungsbeispielen wird in Verbindung mit Zeichnungen die Erfindung näher erläutert. Es zeigen
- Figur 1: einen Schnitt der Hauptbestandteile des Roboters mit seinen Achsen 1 bis 5
- Figur 2: einen Schnitt der Rück- und Seitenansicht gemäß Figur 1
- Figur 3: einen Schnitt mit seinen Hauptbestandteilen der erfindungsgemäßen Lösung
- Figur 4: einen vergrößerten Ausschnitt zu der erfindungsgemäßen Lösung

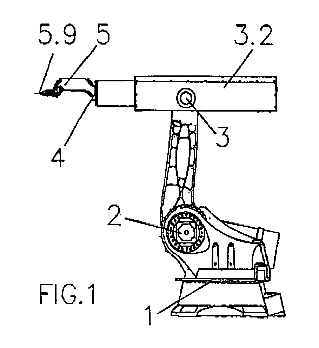

Die in Fig. 1 dargestellten Bauteile, zum Beispiel eines Knickarmroboters, sind die Aneinanderreihung der einzelnen Achsen 1 bis 5 und dienen dem besseren Verständnis. Die Achsen 1 = 1, 2 = 2 und 3 = 3 stellen hierbei die Grundachsen und die Achsen 4 und 5 die Kopfachsen 4 und 5 sowie als 5.9 bezeichnende i-aserdüse dar.

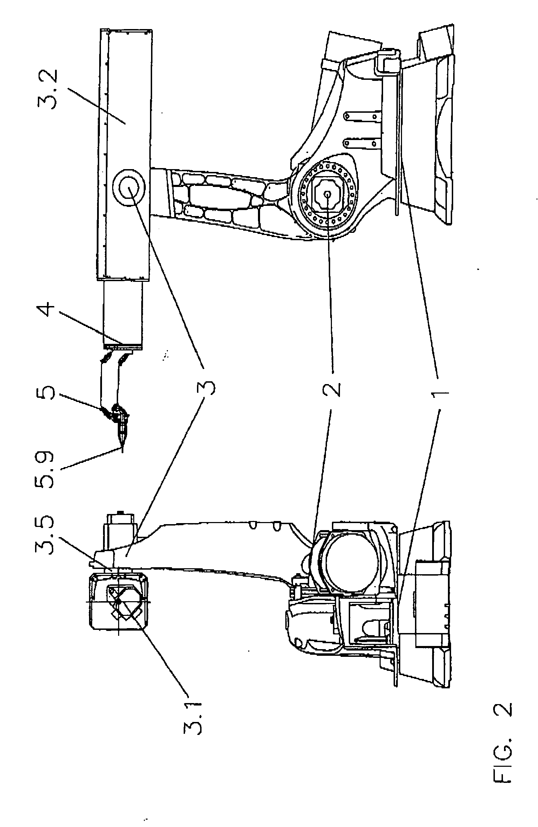

Ein Lasergehäuse 3.2 mit integriertem Laser 3.1 an einer Antriebseinheit 3.5 der Achse 3 ist in Verbindung mit der Fig,1 als deren Rückansicht dargestellt. Dabei soll gleichzeitig verdeutlicht werden, dass die Achsen 1; 2; 3 als Grund- und zugleich als Trägerachsen zum Tragen des Lasergehäuses 3.2 dienen. Die Kopfachsen 4; 5 mit der Laserdüse 5.9 dienen zum Umlenken des Laserstrahls 6. (Fig. 2)

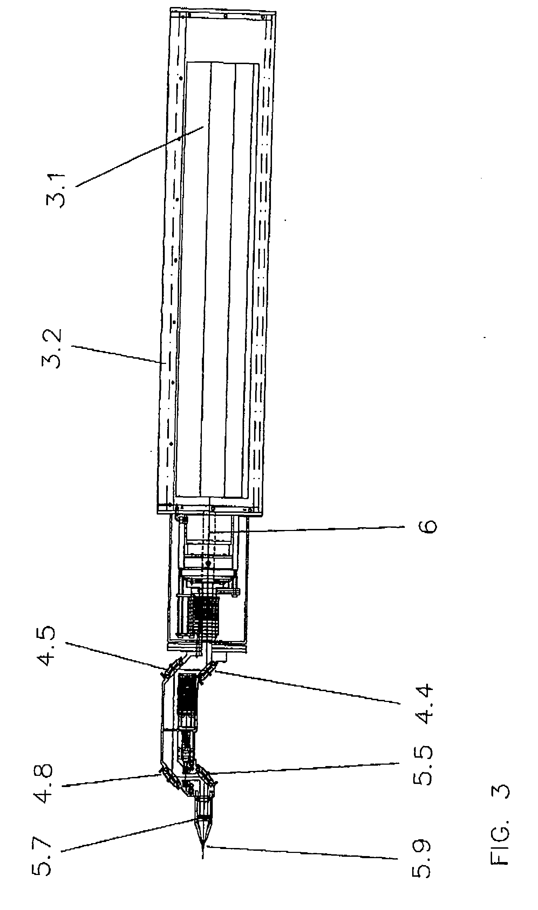

Fig. 3 zeigt den vorderen Bereich eines Roboters mit dem erfindungsgemäßen Lösungsgedanken, dem angebauten und zugleich integrierten Laser 3.1 an die Achse 3. Der Laserstrahl 6 ist auf einen ersten Umlenkspiegel 4.4 der Kopfachse 4 gerichtet und mit seinem Lasergehäuse 3.2 direkt in einem Winkel um 90° an eine Abtriebseinheit 3.5 der Achse 3 des Roboters anzubringen, so dass der Strahlaustritt aus dem Laser 3.1 in Richtung der Kopfachsen 4; 5 erfolgt. Der Laserstrahl 6 ist auf den ersten Umlenkspiegel 4.4 der Kopfachse 4 zu führen, der diesen Laserstrahl 6 auf den zweiten Umlenkspiegel 4.5 ebenfalls der Kopfachse 4 umlenkt. Von hier geht der Laserstrahl 6 auf den dritten Umlenkspiegel 4.8, der den Laserstrahl 6 wiederum auf den vierten Umlenkspiegel 5.5 umlenkt. Nachfolgend geht der Laserstrahl 6 über eine Fokussieroptik 5.7 und verlässt den Roboter über eine Laserdüse 5.9. Hierbei besteht die Möglichkeit, das Lasergehäuse 3.2 an jedem beliebigen Robotertyp, auch mit geringen Modifikationen, anzuordnen.

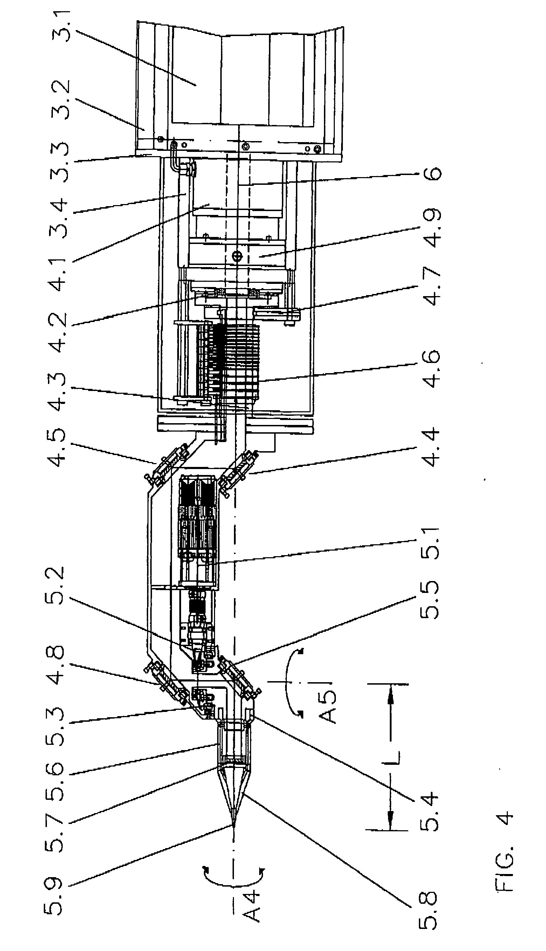

Gemäß Fig. 4 folgt im Anschluss an diesem Lasergehäuse 3.2 ein Anschlussflansch 3.3 mit einem Aufnahmering 3.4 für die Antriebseinheit 4.1 der Kopfachse 4. Nachfolgend dieser Antriebseinheit 4.1 folgt ein Getriebe 4.9 mit seinem Abtriebsflansch 4.2. Daran folgt ein Trägerrohr 4.3 mit Innenbohrungen als Verbindung zur Kopfachse 4. Auf dem Trägerrohr 4.3 ist jeweils eine Drehdurchführung 4.6 für die Elektrosignale und eine Drehdurchführung 4.7 für das Prozessgas anzuordnen. Das Prozessgas selbst kann ein CO₂ oder ein anderer Typ eines Gases sein.
In der Kopfachse 4 befinden sich die Umlenkspiegel 4.4; 4.5; 4.8, als auch eine Antriebseinheit 5.1 für die Kopfachse 5 und ein Getriebe 5.2 für die Kopfachse 5. In dem Gehäuse 5.8 der Kopfachse 5 ist die Fokussieroptik 5.7 über ein Schnellwechselfach eingebaut sowie der Kanal 5.6 für das Prozessgas integriert. Die Prozessgaszuführung ist von der Drehdurchführung 4.7 zu einem Anschluss 5.4 für das Prozessgas zu führen.
Die Darstellung einer Drehachse A4 der Kopfachse 4 als auch einer Drehachse A5 der Kopfachse 5 dienen dem besseren Verständnis. Gegenüber der im Stand der Technik benannten Lösung, mittels einer langen Handlänge zu arbeiten, ist hier auf Grund der erfindungsgemäßen Lösung, dass das Lasergehäuse 3,2 direkt an der Abtriebseinheit 3.5 in einem Winkel um 90° zu der Mittelachse der Achse 3 und im Anschluss an dem Lasergehäuse 3.2 die Antriebseinheit 4.1 der ersteren Kopfachse 4 zuzuordnen ist, der Roboter mit einer wesentlich kürzeren Handlänge L zu betätigen.

Folgende Absätze sind einschließlich der jeweiligen Rückbezüge einbezogen:
1. Integration eines Lasers an einem Roboter mit einer zentralen Strahlzuführung in eine Achse 4 mit nachfolgender Spiegelumlenkung in eine Achse 5 mit einer nachfolgenden Bearbeitungsoptik, gekennzeichnet dadurch, dass ein Lasergehäuse (3.2) direkt an einer Abtriebseinheit (3.5) in einem Winkel um 90° zu der Mittelachse einer Achse 3 (3) so anzuordnen ist, dass der Austritt des Laserstrahls (6) in die Achsen 4 und 5 als Kopfachsen (4;5) erfolgt, und dass im Anschluss an dem Lasergehäuse (3.2) eine Antriebseinheit (4.1) der ersteren Kopfachse 4 (4) zuzuordnen ist.
2. Integration eines Lasers an einem Roboter nach Absatz 1, gekennzeichnet dadurch, dass auf einem der Kopfachse 4 (4) zugeordnetem Trägerrohr (4.3) eine Drehdurchführung (4.6) für Elektrosignale angeordnet ist.
3. Integration eines Lasers an einem Roboter nach einem der vorangegangenen Absätze 1 und 2, gekennzeichnet dadurch, dass auf einem der Kopfachse 4 (4) zugeordnetem Trägerrohr (4.3) eine Drehdurchführung (4.7) für das Prozessgas angeordnet ist.
4. Integration eines Lasers an einem Roboter nach einem der vorangegangenen Absätze 1 bis 3, gekennzeichnet dadurch, dass das Lasergehäuse (3.2) an die Abtriebseinheit (3.5) der Achse 3 (3) in Richtung des Laserstrahls (6) freiwählbar anzubringen ist.
5. Integration eines Lasers an einem Roboter nach einem der vorangegangenen Absätze 1 bis 4, **gekennzeichnet dadurch,** dass zur Umlenkung des Laserstrahls (6) vier Umlenkspiegel (4.4; 4.5; 4.8; 5.5) anzuordnen sind.
6. Integration eines Lasers an einem Roboter nach einem der vorangegangenen Absätze 1 bis 5, gekennzeichnet dadurch, dass ein Teil der Umlenkspiegel (4.4; 4.5; 4.8) der Kopfachse 4 (4) zuzuordnen ist.
7. Integration eines Lasers an einem Roboter nach einem der vorangegangenen Absätze 1 bis 6, gekennzeichnet dadurch, dass ein Teil der Umlenkspiegel (5.5) der Kopfachse 5 (5) zuzuordnen ist.
8. Integration eines Lasers an einem Roboter nach einem der vorangegangenen Absätze 1 bis 7, gekennzeichnet dadurch, dass zwischen dem Laser (3.1) und der Fokussleroptik (5.7) für die Kopfachsen (4; 5) jeweils eine Antriebseinheit (4.1; 5.1) zuzuordnen ist.
9. Integration eines Lasers an einem Roboter nach einem der vorangegangenen Absätze 1 bis 8, **gekennzeichnet dadurch,** dass zum Antreiben der Kopfachse (4) die Antriebseinheit (4.1) mit einem Getriebe (4.7) unmittelbar zu verbinden ist.
10. Integration eines Lasers an einem Roboter nach einem der r Absätze 1 bis 7, gekennzeichnet dadurch, dass in einem Gehäuse (5.8) der Kopfachse (4) die Antriebseinheit (5.1) und ein Getriebe (5.2) für die Kopfachse (5) unterzubringen sind.

| **Pos.** | **Bauteil** | **Beschreibung** |
|---|---|---|
| 1 | Achse 1 | |
| 2 | Achse 2 | |
| 3 | Achse 3 | |
| 3.1 | Laser | |
| 3.2 | Lasergehäuse | |
| 3.3 | Anschlussflansch | |
| 3.4 | Aufnahmering Antriebseinheit Achse 4 | |
| 3.5 | Abtriebseinheit Achse 3 | |
| 4 | Achse 4 | |
| 4.1 | Antriebseinheit Achse 4 | |
| 4.2 | Abtriebsflansch Achse 4 | |
| 4.3 | Trägerrohr mit Innenbohrung | |
| 4.4 | Umlenkspiegel Nr. 1 | |
| 4.5 | Umlenkspiegel Nr. 2 | |
| 4.6 | Drehdurchführung Elektrosignale | |
| 4.7 | Drehdurchführung Prozessgas | |
| 4.8 | Umlenkspiegel Nr. 3 | |
| 4.9 | Getriebe Achse 4 | |
| 5 | Achse 5 | |
| 5.1 | Antriebseinheit Achse 5 | |
| 5.2 | Getriebe Achse 5 | |
| 5.3 | Lager Achse 5 | |
| 5.4 | Anschluss für Prozessgas | |
| 5.5 | Umlenkspiegel Nr. 4 | |
| 5.6 | Kanal für Prozessgas | |
| 5.7 | Fokosieroptik | |
| 5.8 | Gehäuse Achse 5 | |
| 5.9 | Laserdüse | |
| 6 | Laserstrahl | |

## Patentansprüche

1. Integration eines Lasers an einem Roboter mit einer zentralen Strahlzuführung in eine Achse 4 mit nachfolgender Spiegelumlenkung in eine Achse 5 mit einer nachfolgenden Bearbeitungsoptik, **gekennzeichnet dadurch, dass** ein Lasergehäuse (3.2) direkt an einer Abtriebseinheit (3.5) in einem Winkel um 90° zu der Mittelachse einer Achse 3 (3) so anzuordnen ist, dass der Austritt des Laserstrahls (6) in die Achsen 4 und 5 als Kopfachsen (4;5) erfolgt, und dass im Anschluss an dem Lasergehäuse (3.2) eine Antriebseinheit (4.1) der ersteren Kopfachse 4 (4) zuzuordnen ist.

2. Integration eines Lasers an einem Roboter nach Anspruch 1, **gekennzeichnet dadurch, dass** auf einem der Kopfachse 4 (4) zugeordnetem Trägerrohr (4.3) eine Drehdurchführung (4.6) für Elektrosignale angeordnet ist.

3. Integration eines Lasers an einem Roboter nach einem der vorangegangenen Ansprüche 1 und 2, **gekennzeichnet dadurch, dass** auf einem der Kopfachse 4 (4) zugeordnetem Trägerrohr (4.3) eine Drehdurchführung (4.7) für das Prozessgas angeordnet ist.

4. Integration eines Lasers an einem Roboter nach einem der vorangegangenen Ansprüche 1 bis 3, **gekennzeichnet dadurch, dass** das Lasergehäuse (3.2) an die Abtriebseinheit (3.5) der Achse 3 (3) in Richtung des Laserstrahls (6) freiwählbar anzubringen ist.

5. Integration eines Lasers an einem Roboter nach einem der vorangegangenen Ansprüche 1 bis 4, **gekennzeichnet dadurch, dass** zur Umlenkung des Laserstrahls (6) vier Umlenkspiegel (4.4; 4.6; 4.8; 5.5) anzuordnen sind.

6. Integration eines Lasers an einem Roboter nach einem der vorangegangenen Ansprüche 1 bis 5, **gekennzeichnet dadurch, dass** ein Teil der Umlenkspiegel (4.4; 4.5; 4.8) der Kopfachse 4 (4) zuzuordnen ist.

7. Integration eines Lasers an einem Roboter nach einem der vorangegangenen Ansprüche 1 bis 6, **gekennzeichnet dadurch, dass** ein Teil der Umlenkspiegel (5.5) der Kopfachse 5 (5) zuzuordnen ist.

8. Integration eines Lasers an einem Roboter nach einem der vorangegangenen Ansprüche 1 bis 7, **gekennzeichnet dadurch, dass** zwischen dem Laser (3.1) und der Fokussieroptik (5.7) für die Kopfachsen (4; 5) jeweils eine Antriebseinheit (4.1; 5.1) zuzuordnen ist.

9. Integration eines Lasers an einem Roboter nach einem der vorangegangenen Ansprüche 1 bis 8, **gekennzeichnet dadurch, dass** zum Antreiben der Kopfachse (4) die Antriebseinheit (4.1) mit einem Getriebe (4.7) unmittelbar zu verbinden ist.

10. Integration eines Lasers an einem Roboter nach einem der Ansprüche 1 bis 7, **gekennzeichnet dadurch, dass** in einem Gehäuse (5.8) der Kopfachse (4) die Antriebseinheit (5.1) und ein Getriebe (5.2) für die Kopfachse (5) unterzubringen sind.
